# EUROPÄISCHE PATENTSCHRIFT

(11) **EP 2 545 990 B1**
(45) Veröffentlichungstag und Bekanntmachung des Hinweises auf die Patenterteilung: **28.11.2018**
(21) Anmeldenummer: 11009902.5
(22) Anmeldetag: 16.12.2011
(51) Int. Cl.: B01J 21/04, B01J 23/10, B01J 37/03, B01J 35/10

(54) **Verfahren zur Herstellung von Kompositen aus Aluminiumoxid und Cer-/Zirkonium-Mischoxiden**
Method for producing composites out of aluminium oxide and cerium/zirconium mixed oxides
Procédé de fabrication de composites en oxyde d'aluminium et oxydes mixtes cer/zirkonium

(30) Priorität: 14.07.2011 DE 102011107702
(43) Veröffentlichungstag der Anmeldung: 16.01.2013
(73) Patentinhaber: SASOL Germany GmbH, 20537 Hamburg (DE)
(72) Erfinder: Glöckler, Reiner, 25693 St.Michaelisdonn (DE); Paeger, Anja, 25554 Landrecht (DE); Schöneborn, Marcos, 20303 Hamburg (DE)
(74) Vertreter: Müller Schupfner & Partner Patent- und Rechtsanwaltspartnerschaft mbB

(56) Entgegenhaltungen:
- WO-A1-2006/119549
- US-B1- 6 306 794
- US-B1- 6 831 036

## Beschreibung

Die vorliegende Erfindung betrifft ein Verfahren zur Herstellung von Kompositen umfassend Aluminiumoxid und Cer-/ Zirkonium-Mischoxide, nachfolgend kurz Al/Ce/Zr-Oxidkomposit(e) genannt. Derartig hergestellte Al/Ce/Zr-Oxidkomposite weisen eine erhöhte Thermostabilität auf.

Al/Ce/Zr-Oxidkomposite mit eingelagerten katalytisch aktiven Edelmetallen sind bekannt und werden z.B. zur katalytischen Abgasnachbehandlung, insbesondere von Verbrennungsgasen, eingesetzt, die den Brennraum oder die Brennkammer von Fahrzeugen verlassen haben. Solche Fahrzeugkatalysatoren bestehen meistens aus mehreren Komponenten. Als Träger dient ein temperaturstabiler Wabenkörper aus Keramik, in der Regel Cordierit oder Metallfolien, der eine Vielzahl dünnwandiger Kanäle aufweist. Auf dem Träger befindet sich der so genannte Washcoat. Dieser umfasst poröses Aluminiumoxid (Al₂O₃) sowie Sauerstoffspeicherkomponenten. In dem Washcoat sind weiterhin katalytisch aktive Edelmetalle eingelagert. Bei modernen Abgaskatalysatoren sind dies Platin, Rhodium und/oder Palladium. Der keramische Träger ist mithilfe spezieller Lagermatten, etwa aus Hochtemperaturwolle, seltener in Kombination mit Drahtgestricken, in einem metallischen Gehäuse gelagert. Waschcoats enthaltend Al/Ce/Zr-Oxidkomposite sind zur Abgasnachbehandlung von Verbrennungsmotoren bekannt, wobei die Cer/Zirkonium-Mischoxide als Sauerstoffspeicherkomponente wirken. Die Al/Ce/Zr-Oxidkomposite dieser Erfindung finden Verwendung in obigen Fahrzeugkatalysatoren.

In der WO 2006/070201 wird eine verbesserte Variante zur Herstellung von Mischoxiden aus Aluminiumoxid, Zirkoniumoxid und fakultativ mindestens einem Vertreter aus CeO₂, La₂O₃, Nd₂O₃, Pr₆O₁₁, Sm₂O₃, Y₂O₃ und ggf. weiteren Seltenerd-Oxiden beschrieben. Die Herstellung beruht auf einer gemeinsamen Fällung der entsprecheden Salze. Die Herstellung erfolgt über eine gemeinsame Fällung aller beteiligten Oxide, ausgehend von einer Metallsalzlösung, wobei der pH-Wert während der Fällung im Bereich von 8,5 +/- 1 eingestellt wird. Die Fällung erfolgte durch Zugabe von Alkalihydroxiden, insbesondere Natronlauge.

Die WO 2008/113457 beschreibt die Herstellung von Al/Ce/Zr-Oxidkompositen basierend auf Mischungen von separat hergestelltem Aluminiumoxid und Cer/Zirkonium-Mischoxid.

In der US 5,883,037 wird auf die Bedeutung der Thermostabilität der Kompositmaterialien eingegangen. Der dort beschriebene Prozess sieht ein mehrstufiges Verfahren vor, wonach zunächst Ce-, Zr- und ggf. Pr-Salze durch pH-Wertserhöhung gefällt werden und ein Niederschlag isoliert wird. Der Niederschlag wird mit Alumina unter Mischen in Kontakt gebracht, isoliert und nachfolgend einer Trockung und Kalzinierung unterzogen. Das Alumina ist vorzugsweise stabilisiert durch Fremdionen aus der Gruppe der Seltenen Erden, Ba, Zr oder Si. Die über Fällung hergestellten Ce/Zr-Mischoxide und Ce/Zr/Pr-Mischoxide können ggf. zusätzlich stabilisiert werden, durch z.B. mindestens ein Element der Gruppe VIII, Bismut und/oder weiteres Seltenerd-Element. Ein Nachteil dieses Herstellungsverfahren liegt in der geringen Homogenität des erhaltenen Materials begründet.

Die EP 1172139 A1 beschreibt die Herstellung homogener Al₂O₃/CeO₂/ZrO₂/Y₂O₃/La₂O₃ - Mischoxide über Co-Fällung sowie deren Thermostabilitäten. In dem beschriebenen Prozess wurden die aus gemeinsamer Fällung resultierenden Al-Ce-Zr-Y-La- Hydroxid-Zwischenstufen kalziniert und so in die Oxide überführt.

Aufgabe der vorliegenden Erfindung ist es, verbesserte Al/Ce/Zr- Oxidkomposite bereitzustellen, die deutlich höhere thermische Oberflächenstabilitäten aufweisen, inbesondere bei Temperaturen von 1100°C und mehr (z.B. für 24 Stunden und mehr). Oberflächenstabilität in diesem Sinne ist der (weitgehende) Erhalt der Oberfläche bei hohen Temperturen gemessen nach BET.

Die Aufgabe wird gelöst durch ein Verfahren nach Anspruch 1. Bevorzugte Ausführungformens sind Gegenstand der Unteransprüche und/oder nachfolgend beschrieben.

Es wurde festgestellt, dass die nach dem erfindungsgemäßen Verfahren erhaltenen Al/Ce/Zr Oxidkomposite, enhaltend ggf. weitere Seltenerdoxidkomponenten, zumindest das Ce/Zr-Oxid in Form einer "solid solution" (festen Lösung) enthalten. Dies kann durch Röntgenpulverbeugung nachgewiesen werden. Weiterhin liegen Al₂O₃ und die Ce-Zr-Seltenerd-Mischoxide homogen verteilt nebeneinander vor, wie mittels EDX (energiedipsersiver Röntgenanalyse) und Element-Mapping nachgewiesen wurde. Insbesondere liegen diese vollständig homogen verteilt nebeneinander, so dass keine Domänen für Einzelmetalloxide detektierbar sind.

Der in dieser Erfindung beschriebene Prozess unterscheidet sich vom weiter oben beschriebenen Stand der Technik dadurch, dass eine wässrige Böhmit Suspension (Aufschlämmung) eingesetzt wird und die Fällung in dieser Suspension in Gegenwart löslicher Metallsalze unter Bildung eines Ce-Zr-(ggf. Seltenerd-)Hydroxid Präzipitats erfolgt, wobei das Ce-Zr-(ggf. Seltenerd-)Hydroxid Präzipitat (ebenso wie die spätere Solid-Solution) in der Böhmitmatrix homogen verteilt vorliegt.

In dem hier beschriebenen Prozess kann auf die Verwendung von Alkali und insbesondere Natronlauge verzichtet werden. Die Entfernung von Alkali bzw. Natriumhydroxid aus dem Kompositmaterial ist für die Anwendung zwingend erforderlich und so stellt der Verzicht auf diese Komponente einen wesentlichen Vorteil dar.

Der erfindungegmäße Verfahren umfasst folgende Schritte:
(a) Bereitstellen einer Suspension umfassend Böhmit als Alumina-Precursor und Einstellen des pH-Wertes auf 6 - 11.5, bevorzugt etwa 9 bis 10,5, z.B. mit einer wässrigen Lösung aus Ammoniak. Es handelt es sich um eine wässrige Suspension von Böhmiten, die mit organischen Verbindungen modifiziert sind, die zumindest eine Carboxy-Gruppe und eine oder mehrere weitere Gruppen, ausgewählt aus Hydroxy-(-OH), Oxo-(O), Carboxy (-COO) und/oder Amin- (-NH) Gruppen, aufweist, z.B. Weinsäure oder Zitronensäure, vorzugsweise in Gewichtsanteilen von 0,1 bis 50 Gew.%, insbesondere 3 bis 12 Gew.%, bezogen auf das Trockengewicht des Böhmits.
(b) Herstellung einer wässrigen Metallsalzlöung, die Metallsalze von Cer und von Zirkonium und ggf. einem odere mehreren Seltenerd-Elementen umfasst. Zur Herstellung sind alle in Wasser löslichen Salze (z.B. Acetate, Nitrate, Chloride) geeignet. Löslich in diesem Sinne meint, dass sich unter Rühren bei der Umsetzungstemperatur eine stabile Lösung von zumindest 5 g Salz (bezogen auf die oxidischen Form des Metalls) in 100 g Wasser einstellt. In einer bevorzugten Ausführungsart werden die Metallnitrate verwendet. Im Besonderen wird als Cer-Quelle Ammonium Cer(IV)-nitrat eingesetzt. Nach einer anderen bevorzugten Ausführungsform kann Cer(III)-nitrat eingesetzt werden, wenn die erhaltene Metallsalzlösung aufoxidiert wird, z.B. mit einer wässrigen H₂O₂- Lösung.
(c) Zusammenbringen der Suspension aus (a) mit der Metallsalzlösung aus (b), insbesondere bei Temperaturen von 5 bis 95°C, vorzugsweise 80 bis 95°C, oder Aussetzen der so erhalten Aufschlämmung diesen Tempertauren, insbesondere:
   (c1) Vorlage der Metallsalzlösung und Zutropfen der Alumina-Precursor Suspension und anschließendes Einstellen des pH-Wertes auf 6,5 bis 11, insbesondere 8 bis 10,5.
   (c2) Vorlage der Metallsalzlösung und Zutropfen der Alumina-Precursor und zeitgleich Einstellen des pH-Wertes auf 6,5 bis 11, insbesondere 8 bis 10,5.
   (c3) Vorlage des Alumina-Precursors und gleichzeitiges Zutropfen der Metallsalzlösung und der Ammoniaklösung zur Einhaltung eines pH-Wertes von 6,5 bis 11, insbesondere 8 bis 10,5.
(d) Abtrennen der wässrigen Lösung und Waschen des Feststoffes aus (c) mit Wasser.
   (d1) Nach einer Ausführungsform der Erfindung wird die Suspension aus (c) bei zumindest 90°C und für zumindest 1h hydrothermal gealtert (autoklaviert), dann anschließend filtriert und der Feststoff mit deionisiertem Wasser gewaschen.
   (d2) Trocknen des Feststoffes aus (d), z.B. durch
      (d2.1) Trocknen des Feststoffes, z.B. bei 120°C für 16 h, unter Wärmeeinwirkung.
      (d2.2) Redispergieren des Feststoffes aus (d oder dl) und anschließende Sprühtrocknung. In einer besonderen Ausführungsform werden vor der Sprühtrocknung, und insbesondere erst nach Schritt (c) oder nach dem Redispergieren, eine oder mehrere weitere lösliche Verbindungen zugegeben. Als bevorzugte Salze werden Acetate, z.B. La-Acetat und/oder Salze der Erdalkalielemente, Seltenerdelemente, Zirkonium oder Silicium eingesetzt, z.B. Lantan oder Barium.
(e) Kalzinieren des Festoffes aus (d oder dl oder d2), z.B. im Temperaturbereich von 550-1200°C, bevorzugt im Bereich von 600-1000°C, insbesondere für zumindest 1 h.
Nach einer weiteren Ausführungsform der Erfindng werden obige mit organischen Verbindungen modifiziert Boehmite eingesetzt und gleichzeitig wie oben beschrieben hydrothermal gealtert.
Zum Einstellen des pH-Wertes können Stickstoffbasen Verwendung finden. Dies sind beispielsweise neben Ammoniak auch Harnstoff oder Urotropin.

Bevorzugt weist das Al/Ce/Zr-Oxidkomposit 20 bis 80 Gew.%, vorzugsweise 40-70 Gew.%, Aluminium, 5 bis 80 Gew.%, vorzugsweise 5-40 gew.%, Zirkonium, 5 bis 80 Gew.%, vorzugsweise 5-40 Gew.% Cer, 0 bis 12 Gew.%, vorugsweise 0,1 bis 9 Gew.% Seltenerdmetall(e) (RE) auf, berechnet als Al₂O₃, ZrO₂, CeO₂, RE₂O₃. Der Anteil der weiteren lösliche Verbindungen, die in Schritt (d2.2) nach dem Redispergieren zugesetzt werden, beträgt vorzugsweise 0,1 - 15 Gew.% (berechnet als Oxid) bezogen auf die Masse an Al₂O₃. Bevorzugtse Seltenerd-Metalle sind Neodym, Praesodym, Yttrium und/oder Lanthan. Die Al/Ce/Zr-Oxidkomposite weisen vorzugsweise auch nach 4 h und 1200°C noch Oberflächen von zumindest 20 m²/g, vorzugsweise zumindest 40 m²/g, auf.

Die Aluminium-/Cer-/Zirkonium-Mischoxide können in Fahrzeugkatalysatoren wie 3-Wege Katalysatoren (TWC) oder auch in anderen Komponenten wie NOₓ-Speichern, Diesel-Oxidations-Katalysatoren (DOC) und Diesel-Rußpartikelfiltem (DPF) eingesetzt werden. Deren Aufbau ist eingangs beschrieben.

Böhmite im Sinne dieser Erfindung sind Verbindungen der allgemeinen Formel AlO(OH) x H₂O. Bevorzugt werden Böhmite, die über die Hydrolyse eines Aluminiumalkoxids hergestellt wurden, eingesetz (siehe U.S.-Patent 5055019 "Process for the Production of Boehmitic Aluminas"). Nach diesemVerfahren werden böhmitische Tonerden in einer Reinheit von mindestens 99,95% Al₂O₃ mit definierten Porenradien in einem Bereich zwischen 3 bis 100 nm durch salzfreie, wässrige, neutrale Aluminiumalkoholathydrolyse erhalten, wobei man die aus der Aluminiumalkoholathydrolyse erhaltene Tonerdesuspension in einem Autoklaven a) bei einem Wasserdampfdruck von 1 bis 30 bar entsprechend einer Temperatur von 100 bis 235 C, b) in einem Zeitraum von 0,5 bis 20 Stunden und c) unter Rühren mit einer Umfangsgeschwindigkeit von 1,0 bis 6,0 m/s altert.

Erfindungsgemäß werden zur Herstellung der böhmitischen Tonerden Aluminuimalkoholate eingesetzt, um hochreine Produkte zu erhalten. Die Aluminiumalkoholate können z.B. nach dem Ziegler-Verfahren hergestellt sein, bei dem vorzugsweise ein Reinigungsschritt durch Filtration durchgeführt wird. Zur Herstellung der Alumiuniumalkoholate können beispielsweise C1- bis C24-Alkohole oder deren Gemische eingesetzt werden.

Die eingesetzten Böhmite zeichnen sich u.a. durch ihre besonders hohe Reinheit aus (Gehalte von: SiO₂ < = etwa 0,01%, Fe₂O₃ < = etwa 0,01%, Na₂O < = etwa 0,002%, K₂O < = etwa 0,002 %, TiO₂ < = 0,005 %, andere Elemente < = 0,01%). Unabhänig hiervon werden in einer weiteren bevorzugten Form Böhmite eingesetzt, die ein Porenvolumen von 0,4 bis 1,2 ml/g aufweisen und/oder Kristallitgrößen von 4 bis 40 nm, vorzugsweise 4 bis 16 nm, gemessen am (120) Reflex aufweisen.

Die Böhmite sind mit organischen Verbindungen modifiziert, die zumindest eine Carboxy-Gruppe und eine oder mehrere weitere Gruppen, ausgewählt aus Hydroxy-(-OH), Carboxy-(-COO) und/oder Amin- (-NH, einschließlich -NH₂) Gruppen, aufweist, z.B. Weinsäure oder Zitronensäure, vorzugsweise in Gewichtsanteilen von 0,1 bis 50 Gew.%, insbesondere 5 bis 15 Gew.%, bezogen auf das Trockengewicht des Böhmits. Diese verhindern das Agglomieren und Sedimentieren der Böhmite im alkalischen Milieu. Weitere geeignete substituierte Carbonsäuren im Sinne der Erfindung sind beispielsweise 2-Hydroxypropionsäure, 2-Oxopropansäure, Hydroxybutandicarbonsäure, Dihydroxybutandicarbonsäure, 2-Hydroxypropan-1,2,3-tricarbonsäure (Citronensäure), L-Asparginsäure, L-Serin, Glycin, L-Leucin, L-Tyrosin oder L-Tryptophan.

Basierend auf der vorliegenden Erfindung wurde weiterhin festgestellt, dass die Fällung in Anwesenheit einer alkalischen Suspension aus einem durch Zusatz der obigen mehrfunktionellen organischen Säuren modifizierten Böhmit, insbesondere in Kombination mit der Verwendung von Ammonium Cer(IV)-nitrat als Cer-Quelle, zu Endprodukten mit besonders hoher Thermostabilität führt. Überraschenderweise und unabhängig ist dieser Effekt besonders ausgeprägt, wenn die alkalische Suspension zu der Metallsalzlösung getropft wird.

Die Nachfolgenden Versuchsbeispiele zeigen, dass
a) im Vergleich zu den Herstellungsweisen in EP 1172139 und WO 2006/070201 höhere Restoberflächen erhalten werden,
b) auch nach Kalzinierung unter besonders scharfen Bedingungen (1150°C/36 h, 1200°C/4h) hohe Restoberflächen erhalten werden.
c) In Vergleichsbeispiel 3 werden Oberflächen erhalten, die ebenfalls sehr hoch sind und im Bereich derer liegen, die die mittels des hier beschriebenen Prozesses hergestellten Komposite aufweisen (Vergleichsbeispiel 3 und Beispiel 7). Der hier beschriebene Prozess kommt jedoch ohne die Verwendung von Natrium aus, was einen wesentlichen prozesstechnischen Vorteil darstellt.

Die Messungen der Oberflächen (BET) wurden mit Micromeritics TriStar 3000 gemäß DIN ISO 9277 durchgeführt. Die Röntgendiffraktogramme wurden mit einem Panalytical X'Pert Pro MDB Diffraktometer gemessen. Bei %-Angaben handelt es sich, wenn nicht anders angegeben, um Gewichtsprozente.

### Vergleichsbeispiel 1

### Herstellung analog Beispiel 27 der EP 1172139

### Zusammensetzung: 61,5% Al₂O₃, 21% CeO₂, 15% ZrO₂, 2,5% Y₂O₃

Ein Gemisch bestehend aus 96,43 g einer wässrigen Lösung aus Zirkonylnitrat (ZrO₂-Gehalt = 7%), 52,5g einer wässrigen Lösung aus Cer(III)-nitrat (CeO₂-Gehalt = 18%), 6,32 g einer wässrigen Lösung aus Yttrium-nitrat (Y₂O₃-Gehalt = 17,80%) und 205,61g Aluminiumnitrat-nonahydrat in kristalliner Form wurde mit 600 ml Wasser versetzt und solange gerührt, bis eine klare Lösung vorlag. Diese Lösung wurde mit 7,47 g einer 35% H₂O₂ Lösung (entspricht der 1,2 fachen molaren Stoffmenge an Cer) versetzt und diese Mischung für etwa 25 Minuten gerührt. Die resultierende Lösung wurde dann durch Zugabe einer 24%igen Ammoniak-Lösung auf pH 7 gebracht und für 15 Minuten gerührt.

Die so entstandene Mischung wurde abflitriert und der Filterrückstand mit deionisiertem Wasser bei 60°C gewaschen. Dieser Filterkuchen wurde dann bei 120°C für 16 Stunden getrocknet. Im Anschluss daran wurde der getrocknete Filterkuchen bei zunächst 300°C für 5 Stunden und dann bei 700°C für 5 Stunden kalziniert.

Die gemessene Oberfläche ist in Tabelle 1 wiedergegeben.
BET nach 300°C / 5 Stunden + 700°C / 5 Stunden (Ausgangsmaterial): 168 m²/g
BET nach 950°C / 5 Stunden: 109 m²/g
BET nach 1000°C / 4 Stunden: 84 m²/g
BET nach 1100°C / 2 Stunden: 32 m²/g

### Vergleichsbeispiel 2

### Herstellung analog Beispiel 1 der EP 1172139

### Zusammensetzung: 41% Al₂O₃, 30% CeO₂, 23% ZrO₂, 2,5% Y₂O₃, 3,5% La₂O₃

Ein Gemisch bestehend aus 145,93 g einer wässrigen Lösung aus Zirkonylnitrat (ZrO₂-Gehalt = 7%), 72,25 g einer wässrigen Lösung aus Cer(III)-nitrat (CeO₂-Gehalt = 18%), 6,07 g einer wässrigen Lösung aus Yttrium-nitrat (Y₂O3-Gehalt = 17,80%), 10,81 g einer wässrigen Lösung aus Lanthan-nitrat (La₂O₃-Gehalt = 14,57%) und 138,08 g Aluminiumnitrat-nonahydrat in kristalliner Form wurde mit 600 ml Wasser versetzt und solange gerührt, bis eine klare Lösung vorlag.
Diese Lösung wurde mit 10,71 g einer 35% H₂O₂ Lösung (entspricht der 1,2 fachen molaren Stoffmenge an Cer) versetzt und diese Mischung für etwa 25 Minuten gerührt. Die resultierende Lösung wurde dann durch Zugabe einer 24%igen Ammoniak-Lösung auf pH 7 gebracht und für 15 Minuten gerührt. Die so entstandene Mischung wurde abfiltriert und der Filterrückstand mit deionisiertem Wasser bei 60°C gewaschen.

Dieser Filterkuchen wurde dann bei 120°C für 16 Stunden getrocknet. Im Anschluss daran wurde der getrocknete Filterkuchen zunächst bei 300°C für 5 Stunden und dann bei 700°C für 5 Stunden kalziniert.
Die gemessene Oberfläche ist in Tabelle 2 wiedergegeben.

### Vergleichsbeispiel 3

### Herstellung analog Beispiel 6 der WO 2006/070201.

### Zusammensetzung: 51%Al₂O₃, 14,2% CeO₂, 34,8% ZrO₂

Eine Aluminiumnitrat Lösung wurde durch Einrühren von 112,5 g Aluminiumnitratnonahydrat in 1500 ml Wasser erzeugt. Zu dieser Lösung wurden 14,77g einer Cer(III)-nitrat Lösung (CeO₂-Gehalt = 28,85%) und 149,16 einer Zirkonylnitrat-Lösung (ZrO₂-Gehalt = 7%) gegeben.

Diese Mischlösung wurde dann bei Raumtemperatur für 15 Minuten gerührt. Durch Zugabe von 25%iger Natronlauge wurde ein pH-Wert 10 eingestellt und während des Fällungsprozesses bei diesem Wert gehalten. Es wurden 5 g einer 35%igen H₂O₂ Lösung zugegeben und der pH-Wert wieder auf 10 eingestellt. Die erhaltene Suspension wurde dann für 60 Minuten gerührt. Durch Zugabe von 30%iger Salpetersäure wurde im Anschluss der pH-Wert 8 eingestellt und die Suspension erneut für 60 Minuten gerührt.

Die so entstandene Mischung wurde abfiltriert und der Filterrückstand mit deionisiertem Wasser bei 60°C gewaschen. Dieser Filterkuchen wurde dann bei in 850 ml deionisiertem Wasser suspendiert und durch Zugabe von 25%iger Natronlauge auf pH-Wert 10 eingestellt. Dann erfolgte die Autoklavierung bei 120°C für 6 Stunden. Die gealterte Suspension wurde auf Raumtemperatur abgekühlt, durch Zugabe von Salpetersäure auf pH-Wert 8 gebracht und für 30 Minuten gerührt. Im Anschluss daran wurde die Suspension erneut bei 60°C für eine Stunde gerührt und danach die Flüssigkeit abfiltriert. Der erhaltene Filterkuchen wurde dann mit deionisiertem Wasser bei 60°C gewaschen und am Anschluss daran bei 850°C für 4 Stunden kalziniert. Die gemessene Oberfläche ist in Tabelle 3 wiedergegeben.

### Beispiel 1 (erfindungsgemäß)

### Zusammensetzung: 61,5% Al₂O₃, 21% CeO₂, 15% ZrO₂, 2,5% Y₂O₃ (entsprechend Vergleichsbeispiel 1)

Eine Metallsalzlösung bestehend aus 81,4 g einer Lösung von Ammonium Cer(IV)-nitrat (CeO₂-Gehalt = 12,90%), 103,30 g einer Lösung Zirconylnitrat (ZrO₂-Gehalt = 7,26 %) und 7,0 g einer Lösung aus Yttrium-nitrat (Y₂O₃-Gehalt = 17,80%) wurde vorgelegt und auf 90°C erwärmt. Eine Suspension bestehend aus 615,0 g DISPERAL HP14/7 (Böhmit mit Zitronensäure modifiziert) (Al₂O₃-Gehalt = 5%) wurde durch Einrühren des Feststoffes in deionisiertes Wasser und anschließender Zugabe von 24%igen Ammoniak-Lösung bis pH-Wert 10 hergestellt. Diese Suspension wurde langsam der Metallsalzlösung zugetropft und nach Beendingung der Zugabe der pH-Wert durch Zugabe von 24%igen Ammoniak-Lösung auf 8,7 eingestellt.
Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

**Tabelle 1. Gemessene BET-Oberflächen aus Vergleichsbeispiel 1 und Beispiel 1 nach Kalzinierung [m²/g].**

| | Vergleichsbeispiel 1 (analog EP 1 172 139) | Beispiel 1 (erfindungsgemäß) |
|---|---|---|
| 5 h / 300°C + 5 h / 700°C (Ausgangsmaterial) | 168 | 126 |
| 5 h / 950°C | 109 | 95 |
| 4 h / 1000°C | 84 | 89 |
| 2 h / 1100°C | 32 | 70 |

### Beispiel 2 (erfindungsgemäß)

### Zusammensetzung: 41% Al₂O₃, 30% CeO₂, 23% ZrO₂, 2,5% Y₂O₃, 3,5% La₂O₃ (entsprechend Vergleichsbeispiel 2)

Eine Metallsalzlösung bestehend aus 96,9 g einer Lösung von Ammonium Cer(IV)-nitrat (CeO₂-Gehalt = 12,90%), 131,96 g einer Lösung Zirconylnitrat (ZrO₂-Gehalt = 7,26 %), 10,02 g einer Lösung aus Lanthan-nitrat (La₂O₃-Gehalt = 14,57%) und 5,84 g einer Lösung aus Yttrium-nitrat (Y₂O₃-Gehalt = 17,80%) wurde vorgelegt und auf 90°C erwärmt.
Eine Suspension bestehend aus 341,6 g DISPERAL HP14/7 (Böhmit mit Zitronensäure modifiziert) (Al₂O₃-Gehalt = 5%) wurde durch Einrühren des Feststoffes in deionisiertes Wasser und anschließender Zugabe von einer 24%igen Ammoniak-Lösung bis pH-Wert 10 hergestellt.

Diese Suspension wurde langsam der Metallsalzlösung zugetropft und nach Beendingung der Zugabe der pH-Wert durch Zugabe von 24%igen Ammoniak-Lösung auf 8,5 eingestellt. Diese Mischung wurde dann bei 90°C für 30 Minuten gerührt. Im Anschluss wurde der die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

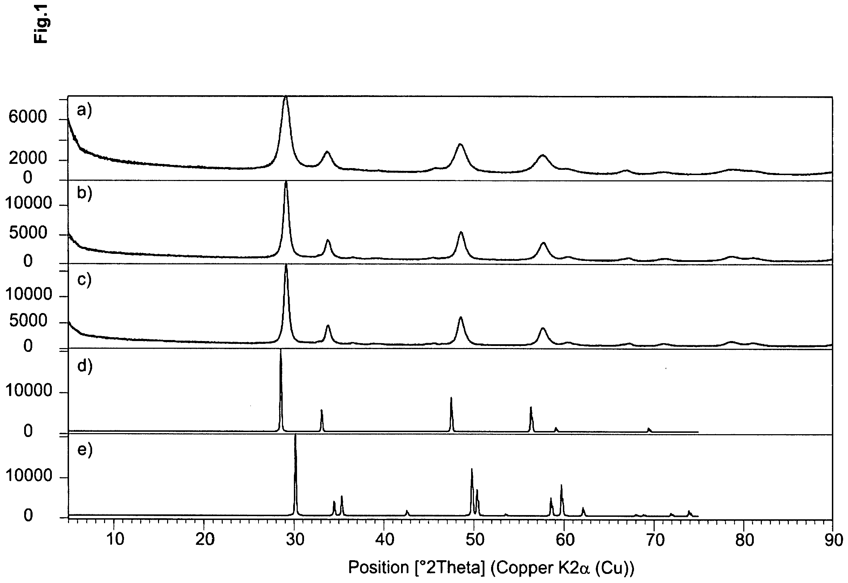

In Fig. 1 sind die Röntgenpulverdiffraktogramme des Materials aus Beispiel 2 nach Kalzinierung gezeigt.
a) nach Kalzinierung 4h/850°C
b) nach Kalzinierung 4h/850°C + 4h 1100°C
c) nach Kalzinierung 4h/850°C + 24h 1100°C
d) Simuliertes Diffraktogramm von CeO₂ (kubisch)
e) Simuliertes Diffraktogramm von ZrO₂ (tetragonal).

### Beispiel 3 (Vergleich)

### Die Zusammensetzung entspricht exakt derjenigen aus Vergleichsbeispiel 2 41% Al₂O₃, 30% CeO₂, 23% ZrO₂, 2,5% Y₂O₃, 3,5% La₂O₃

220,4 g einer Suspension von PURAL SB Böhmit, Al₂O₃-Gehalt = 9,3%) (pH-Wert 9,5) wurden mit einer 24%igen Ammoniak-Lösung auf pH 9,5 gebracht und vorgelegt. Bei Raumtemperatur erfolgte die lansame Zugabe einer Mischung bestehend aus 300 g einer Lösung aus Cer-acetat (CeO₂-Gehalt = 5,0%), 50,3 g einer Lösung aus Zirkonium-acetat (ZrO₂-Gehalt = 22,88%), 24,0 g einer Lösung aus Lanthan-acetat (La₂O₃-Gehalt = 7,3 %) und 31,3 g einer Lösung aus Yttrium-acetat (Y₂O₃-Gehalt = 4,0%). Der pH-Wert wurde dabei konstant bei pH-Wert 9,5 durch zeitgliche Zugabe einer 24%igen Ammoniak-Lösung gehalten. Die erhaltene Mischung wurde für 45 Minuten nachgerührt. Im Anschluss daran wurde die Suspension für 3 Stunden bei 140°C autoklaviert. Die erhaltene Mischung wird abfiltriert und der Feststoff mit deionisiertem Wasser bei 60°C gewaschen. Dieser Filterkuchen wurde für 16 Stunden im Trockenschrank getrocknet und dann bei 850°C kalziniert.

### Beispiel 4 (erfindungsgemäß)

### Zusammensetzung: 41% Al₂O₃, 30% CeO₂, 23% ZrO₂, 2,5% Y₂O₃, 3,5% La₂O₃ (entspricht Vergleichsbeispiel 2)

Eine Böhmit-Suspension bestehend aus 492,0 g DISPERAL HP14/7 (Böhmit mit Zitronensäure modifiziert) (Al₂O₃-Gehalt = 5%) wurde durch Einrühren des Feststoffes in deioniesiertes Wasser und anschließender Zugabe von einer 24%igen Ammoniak-Lösung bis pH-Wert 10 hergestellt.

Bei 90°C wurde zu dieser Suspension langsam eine Metallsalzlösung bestehend aus 139,53 g einer Lösung von Ammonium Cer(IV)-nitrat (CeO₂-Gehalt = 12,90%), 190,1 g einer Lösung aus Zirconylnitrat (ZrO₂-Gehalt = 7,26 %), 14,41 g einer Lösung aus Lanthannitrat (La₂O₃-Gehalt = 14,57%) und 5,45 g einer Lösung aus Yttriumnitrat (Y₂O₃-Gehalt = 27,54 %) zugetropft. Der pH-Wert wurde dabei konstant bei 9,0 durch zeitgleiche Zugabe einer 24%igen Ammoniak-Lösung gehalten. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

### Beispiel 5

### Zusammensetzung: 41% Al₂O₃, 30% CeO₂, 23% ZrO₂, 2,5% Y₂O₃, 3,5% La₂O₃ entspricht Vergleichsbeispiel 2, jedoch unter Verwendung von Cer(III)-nitrat + H₂O₂

Eine Metallsalzlösung bestehend aus 58,34 g einer Lösung von Cer(III)-nitrat (CeO₂-Gehalt = 18,00%), 131,96 g einer Lösung Zirconylnitrat (ZrO₂-Gehalt = 7,26 %), 10,02 g einer Lösung aus Lanthan-nitrat (La₂O₃-Gehalt = 14,57%) und 5,84 g einer Lösung aus Yttriumnitrat (Y₂O₃-Gehalt = 17,80%) wurde vorgelegt.

Bei Raumtemperatur werden 25,74 g einer 30%igen H₂O₂-Lösung, die auf 5°C gekühlt ist, zugegeben. Die erhaltene Suspension wird für 10 Minuten gerührt und dann anschließend auf 90°C erwärmt. Eine Suspension bestehend aus 341,6 g DISPERAL HP14/7 (Böhmit mit Zitronensäure modifiziert) (Al₂O₃-Gehalt = 5%) wurde durch Einrühren des Feststoffes in deionisiertes Wasser und anschließender Zugabe von einer 24%igen Ammoniak-Lösung bis pH-Wert 10 hergestellt.

Diese Suspension wurde langsam der Metallsalzlösung zugetropft und nach Beendingung der Zugabe der pH-Wert durch Zugabe von 24%igen Ammoniak-Lösung auf 8,3 eingestellt. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

**Tabelle 2. Gemessene Oberflächen (BET) aus Beispielen 2-6 und Vergleichsbeispiel 2 nach Kalzinierung in m²/g.**

| | Vgl. 2, analog EP 1 172 139 | Bsp.2 * | Bsp.3 ** | Bsp.4 * | Bsp.5 * |
|---|---|---|---|---|---|
| | | * erfindungsgemäß ** Vergleich | | | |
| 4 h / 850°C (Ausgangsmat.) | 112 | 98 | 89 | 88 | 85 |
| 4 h / 1100°C | 18 | 49 | 34 | 46 | 51 |
| 24 h / 1100°C | 12 | 45 | 34 | 39 | 37 |
| 36 h /1150°C | | 20 | | | 25 |
| 4 h / 1200°C | | 16 | | | 21 |

### Beispiel 6 (erfindungsgemäß)

### Zusammensetzung: 51%Al₂O₃, 14,2% CeO₂, 34,8% ZrO₂ (entspricht Vergleichsbeispiel 3)

Eine Metallsalzlösung bestehend aus 55,0 g einer Lösung von Ammonium Cer(IV)-nitrat (CeO₂-Gehalt = 12,90%) und 239,7 g einer Lösung Zirconylnitrat (ZrO₂-Gehalt = 7,26 %) wurde vorgelegt und auf 90°C erwärmt.
Eine Suspension bestehend aus 510,0 g DISPERAL HP14/7 (Böhmit mit Zitronensäure modifiziert) (Al₂O₃-Gehalt = 5%) wurde durch Einrühren des Feststoffes in deionisiertes Wasser und anschließender Zugabe von einer 24%igen Ammoniak-Lösung bis pH-Wert 10 hergestellt.

Diese Suspension wurde langsam der Metallsalzlösung zugetropft und nach Beendingung der Zugabe der pH-Wert durch Zugabe von 24%igen Ammoniak-Lösung auf 8,7 eingestellt. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.
In Klammern sind die Werte aus Vergleichsbeispiel 3 angegeben.
BET nach 850°C / 4 Stunden (Ausgangsmaterial): 97 m²/g (107)
BET nach 1100°C / 2 Stunden: 62 m²/g (47)
BET nach 1100°C/ 24 Stunden: 36 m²/g (35)

**Tabelle 3. Gemessene Oberflächen (BET) aus Vergleichsbeispiel 3 und Beispiel 7 nach Kalzinierung [m²/g].**

| | Vergleichsbeispiel 3 (analog WO 2006/070201) | Beispiel 6 (erfindungsgemäß) |
|---|---|---|
| 850°C / 4 Stunden (Ausgangsmaterial) | 107 | 97 |
| 2 h / 1100°C | 47 | 62 |
| 24 h / 1100°C | 35 | 36 |

### Beispiel 7 (erfindungsgemäß)

### Zusammensetzung: 50% Al₂O₃, 30% CeO₂, 15 % ZrO₂, 3,5 % La₂O₃, 1,5 % Y₂O₃

Eine Metallsalzlösung bestehend aus 116,3 g einer Lösung von Ammonium Cer(IV)-nitrat (CeO₂-Gehalt = 12,90%), 103,3 g einer Lösung Zirconylnitrat (ZrO₂-Gehalt = 7,26 %), 12,1 g einer Lsöung aus Lanthan-nitrat (La₂O₃-Gehalt = 14,50%) und 4,2 g einer Lösung aus Yttrium-nitrat (Y₂O₃-Gehalt = 17,80 %) wurde vorgelegt und auf 90°C erwärmt.
Eine Suspension bestehend aus 500g DISPERAL HP14/7 (Böhmit mit Zitronensäure modifiziert) (Al₂O₃-Gehalt = 5%) wurde durch Einrühren des Feststoffes in deionisiertes Wasser und anschließender Zugabe von einer 24%igen Ammoniak-Lösung bis pH-Wert 10 hergestellt.

Diese Suspension wurde langsam der Metallsalzlösung zugetropft und nach Beendingung der Zugabe der pH-Wert durch Zugabe von 24%igen Ammoniak-Lösung auf 8,3 eingestellt. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde bei 120°C für 16 Stunden getrocknet und anschließend bei 850°C für 4 Stunden kalziniert.

### Beispiel 8 (erfindungsgemäß)

### Zusammensetzung: 50% Al₂O₃, 30% CeO₂, 15 % ZrO₂, 3,5 % La₂O₃, 1,5 % Y₂O₃

Eine Metallsalzlösung bestehend aus 116,3 g einer Lösung von Ammonium Cer(IV)-nitrat (CeO₂-Gehalt = 12,90%), 103,3 g einer Lösung Zirconylnitrat (ZrO₂-Gehalt = 7,26 %), 12,1 g einer Lösung aus Lanthan-nitrat (La₂O₃-Gehalt = 14,50%) und 4,2 g einer Lösung aus Yttrium-nitrat (Y₂O₃-Gehalt = 17,80 %) wurde vorgelegt und auf 90°C erwärmt.

Eine Suspension bestehend aus 500 g DISPERAL HP14/7 (Böhmit mit Zitronensäure modifiziert) (Al₂O₃-Gehalt = 5%) wurde durch Einrühren des Feststoffes in deioniesiertes Wasser und anschließender Zugabe von einer 24%igen Ammoniak-Lösung bis pH-Wert 10 hergestellt. Diese Suspension wurde langsam der Metallsalzlösung zugetropft und nach Beendingung der Zugabe der pH-Wert durch Zugabe von 24%igen Ammoniak-Lösung auf 9,0 eingestellt. Diese Mischung wurde dann bei 90°C für 30 Minuten gerührt. Im Anschluss wurde der die Mischung abfiltriert und der Filterrückstand mit deionisiertem Wasser bei 60°C gewaschen. Der Filterkuchen wurde unter Rühren in deionisiertem Wasser resuspendiert und dann sprühgetrocknet (Einlass-Temperatur = 220°C, Auslass-Temperatur = 110°C). Das getrocknete Material wurde bei 850°C für 4 Stunden kalziniert.

### Beispiel 9 (erfindungsgemäß)

### Zusammensetzung: 70% Al₂O₃, 20% CeO₂, 7% ZrO₂, 3,0% La₂O₃

Eine Böhmit-Suspension bestehend aus 420,0 g DISPERAL HP14/7 (Böhmit mit Zitronensäure modifiziert) (Al₂O₃-Gehalt = 5%) wurde durch Einrühren des Feststoffes in deioniesiertes Wasser und anschließender Zugabe von einer 24%igen Ammoniak-Lösung bis pH-Wert 10 hergestellt. Bei 90°C wurde zu dieser Suspension langsam eine Metallsalzlösung bestehend aus 46,51 g einer Lösung von Ammonium Cer(IV)-nitrat (CeO₂-Gehalt = 12,9
%), 30,0 g einer Lösung aus Zirconylnitrat (ZrO₂-Gehalt = 7,0%) und 6,18 g einer Lsg. aus Lanthan-nitrat (La₂O₃-Gehalt = 14,57%) zugetropft. Der pH-Wert wurde dabei konstant bei 9,0 durch zeitgleiche Zugabe einer 24%igen Ammoniak-Lösung gehalten. Diese Mischung wurde dann bei 90°C für 30 Minuten gerührt. Im Anschluss wurde die Mischung abfiltriert und der Filterrückstand mit deionisiertem Wasser bei 60°C gewaschen. Der Filterkuchen wurde unter Rühren in deionisiertem Wasser resuspendiert und dann bei 120°C für 16 Stunden getrocknet. Das getrocknete Material wurde im Anschluss bei 850°C kalziniert.

**Tabelle 4. Gemessene Oberflächen (BET) aus Beispielen 8-10 in m²/g.**

| | Bsp.7 | Bsp.8 | Bsp.9 |
|---|---|---|---|
| 4 h / 850°C (Ausgangsmaterial) | 92 | 96 | 101 |
| 4 h / 1100°C | 54 | 54 | 64 |
| 24 h / 1100°C | 43 | 45 | 58 |
| 36 h /1150°C | 27 | 29 | 48 |
| 4 h / 1200°C | 23 | 25 | 40 |

## Patentansprüche

1. Verfahren zur Herstellung von Kompositen umfassend Aluminiumoxid und Cer-/ Zirkonium-Mischoxide umfassend folgende Schritte:
(a) Bereitstellen einer Suspension umfassend Böhmit als Alumina-Precursor und Einstellen des pH-Wertes auf 6 bis 11,5;
(b) Herstellung einer wässrigen Metallsalzlöung, die Metallsalze von Cer und von Zirkonium umfasst;
(c) Zusammenbringen der Suspension aus (a) mit der Metallsalzlösung aus (b) bei Temperaturen von 5 bis 95°C oder Aussetzen der so erhalten Aufschlämmung diesen Temperaturen;
(d) Isolieren eines Feststoffes aus (c); und
(e) Kalzinieren des Festoffes aus (d), wobei
die Böhmite mit organischen Verbindungen versehen sind, die zumindest eine Carboxy-Gruppe (-COO bzw. -COOH) und eine oder mehrere weitere Gruppen ausgewählt aus Hydroxy- (-OH), Oxo- (O), Carboxy- (-COO bzw. -COOH) und/oder Amin- (-NH bzw. -NH2) Gruppen aufweisen.

2. Verfahren gemäß Anspruch 1, wobei das Isolieren das Abtrennen der wässrigen Lösung, das Waschen des Feststoffes aus (c) mit Wasser und das Trocknen des Feststoffes umfasst.

3. Verfahren gemäß Anspruch 1 oder 2, wobei das Isolieren die Trocknung und das (Re-) Dispergieren des Feststoffes aus (c) und die anschließende Sprühtrocknung umfasst.

4. Verfahren gemäß zumindest einem der vorhergehenden Ansprüche, wobei das Komposit weiterhin eine odere mehrere Erdalkalielemente/-Verbindungen, Seltenerdelemente/-Verbindungen, Zirkonium und/oder Silicium, insbesondere SeltenerdElemente/-Verbindungen umfasst, wobei diese vor der Trocknung, und insbesondere erst nach Schritt (c) oder sogar (d) in Form einer oder mehrerer weiterer löslicher Verbindungen zugegeben werden.

5. Verfahren gemäß zumindest einem der vorhergehenden Ansprüche, wobei das Zusammenbringen umfasst:
(c1) Vorlage der Metallsalzlösung und Zutropfen der Alumina-Precursor Suspension und anschließendes Einstellen des pH-Wertes auf 6,5 bis 11, insbesondere 8 bis 10,5;
(c2) Vorlage der Metallsalzlösung und Zutropfen der Alumina-Precursor Suspension und zeitgleich Einstellen des pH-Wertes auf 6,5 bis 11, insbesondere 8 bis 10,5; oder
(c3) Vorlage der Alumina-Precursor Suspension und gleichzeitiges Zutropfen der Metallsalzlösung und der Ammoniaklösung zur Einhaltung eines pH-Wertes von 6,5 bis 11, insbesondere 8 bis 10,5.

6. Verfahren gemäß Anspruch 1, wobei die Suspension aus (c) in wässriger Umgebung bei zumindest 90°C und für zumindest 1 h, vorzugsweise bei zumindest 120°C und für zumindest 4 h hydrothermal gealtert wird.

7. Verfahren gemäß zumindest einem der vorhergehenden Ansprüche, wobei zur Herstellung der Metallsalzlösung in Wasser lösliche Salze der Metalle verwendet werden, insbesondere z.B. Acetate, Nitrate und/oder Chloride.

8. Verfahren gemäß zumindest einem der vorhergehenden Ansprüche, wobei das Ce/Zr-Oxid in Form einer "solid solution" (festen Lösung) im Komposit vorliegt und Al₂O₃ und die Ce-Zr-Seltenerd-Mischoxide homogen verteilt nebeneinander vorliegen.

9. Verfahren gemäß zumindest einem der vorhergehenden Ansprüche, wobei auf die Zugabe von Alkali- und/oder Erdalkalisalzen verzichtet wird, ausgenommen ggf. Bariumsalze.

10. Verfahren gemäß zumindest einem der vorhergehenden Ansprüche, wobei die Böhmite mit organischen Verbindungen versehen sind, die
• 2 bis 12 C-Atome, besonders bevorzugt 4 bis 8 C-Atome, aufweisen, und
• zumindest eine Carboxy-Gruppe (-COO bzw. -COOH) und eine oder mehrere weitere Gruppen ausgewählt aus Hydroxy- (-OH), Oxo- (O), Carboxy- (-COO bzw. -COOH) und/oder Amin- (-NH bzw. -NH₂) Gruppen aufweisen,
vorzugsweise in Gewichtsanteilen von 0,1 bis 50 Gew.%, insbesondere 5 bis 15 Gew.%, bezogen auf das Trockengewicht des Böhmits.

11. Verfahren gemäß zumindest einem der vorhergehenden Ansprüche, wobei die Suspension umfassend Böhmit durch eine Stickstoffbase auf den ph-Wert eingestellt ist, insbesondere Ammoniak, Harnstoff und/oder Urotropin.

12. Verfahren gemäß zumindest einem der vorhergehenden Ansprüche, wobei die Mischoxid-/Kompositzusammensetzung 20 bis 80 Gew.% Aluminium, 5 bis 80 Gew.% Zirkonium, 5 bis 80 Gew.% Cer und ggf. 0 bis 12 Gew.% Seltenerdmetall(e) (RE) aufweist, berechnet als Al₂O₃, ZrO₂, CeO₂, RE₂O₃.

13. Verfahren gemäß gemäß zumindest einem der vorhergehenden Ansprüche, wobei die Böhmite bzw. die Böhmit -Suspension durch Hydrolyse eines Aluminiumalkoxids hergestellt werden, vorzugsweise unter Abtrennung des Alkohols.

## Claims

1. A method for producing composites comprising aluminum oxide and cerium / zirconium mixed oxides comprising the following steps:
(a) providing a suspension comprising boehmite as the alumina precursor and adjusting the pH to 6 to 11.5;
(b) producing an aqueous metal salt solution comprising metal salts of cerium and of zirconium;
(c) bringing the suspension of (a) in contact with the metal salt solution from (b) at temperatures of 5 to 95°C or exposing the resulting slurry to these temperatures;
(d) isolating solids from (c) and
(e) calcining the solids from (d), wherein
the boehmites are provided with organic compounds, having at least one carboxyl group (-COO and/or -COOH) and one or more further groups selected from hydroxy (-OH), oxo (-O), carboxy (-COO and/or -COOH) and/or amine (-NH and/or -NH₂) groups.

2. The method according to claim 1, wherein isolating comprises separation of the aqueous solution, washing of the solids from (c) with water and drying the solids.

3. The method according to claim 1 or 2, wherein isolating comprises the drying and (re)dispersing of the solids from (c) and subsequently spray drying.

4. The method according to any one of the preceding claims, wherein the composite further comprises one or more alkaline earth elements/compounds, rare earth elements/compounds, zirconium and/or silicon, in particular rare earth elements/compounds, wherein these are added before drying, and in particular after step (c) or even (d), in the form of one or more soluble additional compounds.

5. The method according to any one of the preceding claims, wherein bringing in contact comprises:
(c1) starting with the metal salt solution and dropwise addition of the alumina precursor suspension and then adjustment of the pH to 6.5 to 11, in particular 8 to 10,5;
(c2) starting with the metal salt solution and dropwise addition of the alumina precursor suspension and at the same time adjusting the pH to 6.5 to 11, in particular 8 to 10,5; or
(c3) starting with the alumina precursor suspension and at the same time dropwise addition of the metal salt solution and of the ammonia solution to maintain a pH of 6.5 to 11, in particular 8 to 10,5.

6. The method according to claim 1, wherein the suspension of (c) is hydrothermally aged in an aqueous environment at a temperature of at least 90°C for at least one hour, preferably at a temperature of at least 120°C for at least four hours.

7. The method according to anyone of the preceding claims, wherein water soluble salts of the metals are used to prepare the metal salt solution, in particular for example acetates, nitrates and/or chlorides.

8. The method according to anyone of the preceding claims, wherein Ce/Zr oxide is present in the form of a solid solution in the composite and Al₂O₃ and the Ce/Zr rare earth mixed oxides are homogeneously distributed side by side.

9. The method according to anyone of the preceding claims, wherein the addition of alkali and/or alkaline earth salts is omitted, except for optionally barium salts.

10. The method according to anyone of the preceding claims, wherein the boehmites are provided with organic compounds having
• 2 to 12 carbon atoms, in particular preferably 4 to 8 carbon atoms,at least one carboxyl group (-COO and/or -COOH) and one or more further groups selected from hydroxy (-OH), oxo (-O), carboxy (-COO and/or -COOH) and/or amine (-NH and/or -NH₂) groups,
preferably in an amount by weight of 0.1 % to 50% by weight, in particular 5 to 15% by weight, based on the dry weight of the boehmite.

11. The method according to any one of the preceding claims, wherein the suspension comprising boehmite is adjusted to the pH by a nitrogen base, in particular by ammonia, urea and/or urotropin.

12. The method according to anyone of the preceding claims, wherein the mixed oxide/composite composition comprises 20% to 80% by weight aluminum, 5% to 80% by weight zirconium, 5% to 80% by weight cerium and optionally 0% to 12% by weight rare earth metal(s) (RE), calculated as Al₂O₃, ZrO₂, CeO₂, RE₂O₃.

13. The method according to anyone of the preceding claims, wherein the boehmite and/or boehmite suspension are prepared by hydrolysis of an aluminum alkoxide, preferably with separation of an alcohol.

## Revendications

1. Procédé de fabrication de composites comprenant de l'oxyde d'aluminium et des oxydes mixtes de cérium/zirconium, comprenant les étapes suivantes :
(a) mise à disposition d'une suspension comprenant de la boéhmite comme précurseur d'alumine et ajustement du pH de 6 à 11,5 ;
(b) préparation d'une solution aqueuse de sel métallique, qui comprend des sels métalliques de cérium et de zirconium ;
(c) réunion de la suspension provenant du (a) avec la solution de sel métallique provenant du (b) à des températures de 5 à 95°C ou soumission de la pâte ainsi obtenue à ces températures ;
(d) isolation d'une matière solide provenant du (c) ; et
(e) calcination de la matière solide provenant du (d), où
les boéhmites sont dotées de composés organiques, qui comportent au moins un groupe carboxy (-COO et/ou COOH) et un ou plusieurs autres groupes choisis parmi des groupes hydroxy (-OH), oxo (O), carboxy (-COO et/ou COOH) et/ou amino (-NH et/ou -NH₂).

2. Procédé selon la revendication 1, dans lequel l'isolation comprend la séparation de la solution aqueuse, le lavage de la matière solide provenant du (c) avec de l'eau et le séchage de la matière solide.

3. Procédé selon la revendication 1 ou 2, dans lequel l'isolation comprend le séchage et la (re-)dispersion de la matière solide provenant du (c) et le séchage par pulvérisation consécutif.

4. Procédé selon au moins l'une des revendications précédentes, dans lequel le composite comprend en outre un ou plusieurs composés/éléments alcalino-terreux, composés/éléments de terre rare, du zirconium et/ou silicium, en particulier des composés/éléments de terre rare, ceux-ci étant ajoutés avant le séchage, et notamment seulement après l'étape (c) voire même (d) sous la forme d'un ou de plusieurs autres composés solubles.

5. Procédé selon au moins l'une des revendications précédentes, dans lequel la réunion comprend :
(c1) présentation de la solution de sel métallique et ajout goutte à goutte de la suspension de précurseur d'alumine et ajustement consécutif du pH de 6,5 à 11, en particulier 8 à 10,5 ;
(c2) présentation de la solution de sel métallique et ajout goutte à goutte de la suspension de précurseur d'alumine et ajustement simultané du pH de 6,5 à 11, en particulier 8 à 10,5 ; ou
(c3) présentation de la suspension de précurseur d'alumine et ajout goutte à goutte simultané de la solution de sel métallique et de la solution ammoniaquée pour respecter un pH de 6,5 à 11, en particulier 8 à 10,5.

6. Procédé selon la revendication 1, dans lequel la suspension provenant du (c) est soumise à un vieillissement hydrothermal en environnement aqueux à au moins 90°C pendant au moins 1 h, de préférence à au moins 120°C et pendant au moins 4 h.

7. Procédé selon au moins l'une des revendications précédentes, dans lequel on utilise des sels de métaux solubles dans l'eau pour la préparation de la solution de sel métallique, en particulier par exemple des acétates, des nitrates et/ou des chlorures.

8. Procédé selon au moins l'une des revendications précédentes, dans lequel l'oxyde de Ce/Zr se présente sous la forme d'une « solid solution » (solution solide) dans le composite, et Al₂O₃ et les oxydes mixtes de Ce-Zr-terre rare coexistent répartis de manière homogène.

9. Procédé selon au moins l'une des revendications précédentes, dans lequel on renonce à l'addition de sels alcalins et/ou alcalino-terreux, à l'exception le cas échéant des sels de baryum.

10. Procédé selon au moins l'une des revendications précédentes, dans lequel les boéhmites sont dotées de composés organiques, qui comportent
• 2 à 12 atomes de C, de manière particulièrement préférée 4 à 8 atomes de C, et
• au moins un groupe carboxy (-COO et/ou COOH) et un ou plusieurs autres groupes choisis parmi des groupes hydroxy (-OH), oxo (O), carboxy (-COO et/ou COOH) et/ou amino (-NH et/ou -NH₂).
de préférence à des proportions en poids de 0,1 à 50 % en poids, en particulier 5 à 15 % en poids, par rapport au poids sec de la boéhmite.

11. Procédé selon au moins l'une des revendications précédentes, dans lequel la suspension comprenant la boéhmite est ajustée au pH par le biais d'une base azotée, en particulier de l'ammoniac, de l'urée et/ou de l'urotropine.

12. Procédé selon au moins l'une des revendications précédentes, dans lequel la composition oxyde mixte/composite présente 20 à 80 % en poids d'aluminium, 5 à 80 % en poids de zirconium, 5 à 80 % en poids de cérium et le cas échéant 0 à 12 % en poids d'un métal ou de métaux de terre rare (RE), calculés sous forme Al₂O₃, ZrO₂, CeO₂, RE₂O₃.

13. Procédé selon au moins l'une des revendications précédentes, dans lequel les boéhmites et/ou la suspension de boéhmite sont préparées par hydrolyse d'un alcoxyde d'aluminium, de préférence en séparant l'alcool.
